# EUROPÄISCHE PATENTANMELDUNG

(11) **EP 3 597 485 A1**
(43) Veröffentlichungstag der Anmeldung: **22.01.2020**
(21) Anmeldenummer: 19186212.7
(22) Anmeldetag: 15.07.2019
(51) Int. Cl.: B60Q 11/00, H05B 33/08

(54) **GLÜHLAMPENSIMULATIONSSCHALTUNG UND VERFAHREN**

(30) Priorität: 18.07.2018 DE 102018005663
(71) Anmelder: Kliem, Thomas, 78628 Rottweil (DE)
(72) Erfinder: Kliem, Thomas, 78628 Rottweil (DE)
(74) Vertreter: Düsselberg, David

(57) **Zusammenfassung**

Die Erfindung betrifft eine Glühlampensimulationsschaltung zur elektronischen Ansteuerung und Überwachung von Fahrzeugbeleuchtungen, mit einer Regelschaltung zur Lastsimulation, die eine parallel zu einer zu überwachenden Leuchte schaltbare Last aufweist, wobei mittels der Regelschaltung ein Teil der bei der Lastsimulation verbrauchten Leistung wieder in das Bordnetz zurückführbar ist, aufweisend eine der Regelschaltung vorgeschaltete Anti-Flicker-Schaltung, die dazu ausgebildet ist, elektrische Spannungsänderungen einer pulsweitenmodulierten Spannung eines Stromkreises des Bordnetzes zu kompensieren. Ferner betrifft die Erfindung ein Verfahren zur Überwachung von Fahrzeugbeleuchtungen mit Glühlampensimulation mittels einer erfindungsgemäßen Glühlampensimulationsschaltung, bei dem eine Glühlampe durch eine parallel zu der zu überwachenden Leuchte geschaltete Last in einer Regelschaltung simuliert wird, wobei ein Teil der bei der Lastsimulation verbrauchten Leistung wieder in das Bordnetz zurückgeführt wird, wobei elektrische Spannungsänderungen einer Spannung des Bordnetzes bei der Durchführung der Lastsimulation kompensiert werden.

## Beschreibung

Die Erfindung betrifft eine Glühlampensimulationsschaltung und ein Verfahren zur Überwachung von Fahrzeugbeleuchtung mit Glühlampensimulation.

Schaltungen und Verfahren dieser Art sind dem Grunde nach aus dem Stand der Technik bekannt. Sie dienen dem Zweck, die Nachrüstung von älteren Fahrzeugen aller Art (PKW, LKW, jeweils mit oder ohne Anhänger) mit modernen Leuchtmitteln, insbesondere in Form von LEDs zu ermöglichen. Ältere Fahrzeuge sind ab Werk zumeist mit Leuchtmitteln in Form von Glühlampen, zur Erfüllung der jeweiligen Lichtfunktion (insbesondere Blinker, Bremslicht, Rücklicht, Nebelschlusslicht oder Rückfahrlicht) ausgerüstet.

Aus Gründen der Sicherheit wird fahrzeugherstellerseitig ein Großteil der Lichtfunktionen auf Fahrzeugen überwacht und ein Ausfall dem Fahrer optisch und/oder akustisch mitgeteilt.

Ein Problem besteht jedoch darin, dass für die Funktionsüberwachung der Lichtfunktionen die Fahrzeugelektroniken für den Betrieb mit Glühlampen ausgelegt sind. Die Schwellenwerte liegen daher im Bereich der für Glühlampen definierten Leistungen wie beispielsweise 5 W, 10 W oder 21 W. Demgegenüber benötigen LEDs vergleichsweise wenig Leistung. Beispielsweise im Bereich 3 bis 5 W. Dies führt bei der Überwachungselektronik jedoch in der Regel zu einer Fehlermeldung, da die Elektronik aufgrund der Leistungsdifferenz einen Ausfall des Leuchtmittels detektiert und anzeigt.

Zur Behebung dieser Problematik ist es aus der EP 2 173 140 A1 eine Schaltung und ein Verfahren bekannt, bei dem eine Glühlampe durch eine parallel zu der zu überwachenden Leuchte (LED) geschaltete Last in der Regelschaltung simuliert wird. Zur Vermeidung von Wärmeverlusten wird ferner vorgeschlagen, dass die Regelschaltung einen Teil der bei der Lastsimulation verbrauchten Leistung wieder in das Bordnetz zurückführt.

Obgleich sich die obige Ausgestaltung im Stand der Technik bewährt hat, besteht weiterhin Verbesserungsbedarf. Bordnetze stellen zum Betrieb der Leuchtmittel sowie der Überwachungselektronik in der Regel getaktete, d.h. pulsweitenmodulierte Spannungen bereit. Bei der bekannten Glühlampensimulation kommt es dabei zu unerwünschten Effekten. Durch die getaktete Ansteuerung der Simulation wird mit jeder Ansteuerung ein neuer Einschaltimpuls erzeugt, der von der Fahrzeugelektronik nach vergleichsweise kurzer Betriebszeit als Überlast gewertet und als Fehler ausgegeben wird.

Der Erfindung liegt die **Aufgabe** zugrunde, eine Glühlampensimulationsschaltung und ein Verfahren mit einer Glühlampensimulationsschaltung anzugeben, die eine hinsichtlich der Fehleranfälligkeit verbesserte Nachrüstung von modernen Leuchtmitteln in Fahrzeugen erlauben.

Zur **Lösung** dieser Aufgabe schlägt die Erfindung vorrichtungsseitig eine Glühlampensimulationsschaltung zur elektronischen Ansteuerung und Überwachung von Fahrzeugbeleuchtungen vor, mit einer Regelschaltung zur Lastsimulation, die eine parallel zu einer zu überwachenden Leuchte schaltbare Last aufweist, wobei mittels der Regelschaltung ein Teil der bei der Lastsimulation verbrauchten Leistung wieder in das Bordnetz zurückführbar ist, aufweisend eine der Regelschaltung vorgeschaltete Anti-Flicker-Schaltung, die dazu ausgebildet ist, elektrische Spannungsänderungen einer pulsweitenmodulierten Spannung eines Stromkreises des Bordnetzes zu kompensieren.

Verfahrensseitig schlägt die Erfindung zur Lösung der Aufgabe ein Verfahren zur Überwachung von Fahrzeugbeleuchtungen mit Glühlampensimulation mittels einer erfindungsgemäßen Glühlampensimulationsschaltung vor, bei dem eine Glühlampe durch eine parallel zu der zu überwachenden Leuchte geschaltete Last in einer Regelschaltung simuliert wird, wobei ein Teil der bei der Lastsimulation verbrauchten Leistung wieder in das Bordnetz zurückgeführt wird, wobei elektrische Spannungsänderungen einer pulsweitenmodulierten Spannung des Bordnetzes bei der Durchführung der Lastsimulation kompensiert werden.

Eine "Anti-Flicker-Schaltung" im Sinne der Erfindung ist eine solche, die dazu ausgebildet ist, elektrische Spannungsänderungen einer pulsweitenmodulierten Spannung eines Stromkreises des Bordnetzes zu kompensieren. Es hat sich gezeigt, dass durch diese Lösung die ansteuerungsbedingte Fehlermeldungen der Fahrzeugelektronik verhindert werden. "Spannungsänderungen einer pulsweitenmodulierten (PWM) Spannung" im Sinne der Erfindung stellt darauf ab, dass ein PWM-Signal in der Regel zwischen einem Maximalwert und einem Minimalwert wechselt. Dabei wird bei konstanter Frequenz der Tastgrad eines Rechteckpulses moduliert.

Erfindungsgemäß wird die Glühlampensimulationsschaltung über das Bordnetz des jeweiligen Fahrzeugs zu deren Betrieb mit einer elektrischen Spannung versorgt. Hierfür ist die Glühlampensimulationsschaltung elektrisch an das Bordnetz, vorzugsweise an einen Stromkreis des Bordnetzes, anschließbar ausgebildet.

Gemäß einer bevorzugten Ausgestaltung der Erfindung wird die Kompensation dadurch erreicht, dass der Regelschaltung eine zusätzliche Versorgungsspannung zugeführt wird. Vorrichtungsseitig stellt die Anti-Flicker-Schaltung hierfür einen eigenen parallelen Stromkreis bereit. Über diesen eigenen Stromkreis ist der Regelschaltung parallel zur Spannung des Bordnetzes die zusätzliche Versorgungsspannung zuführbar. Hierdurch wird erreicht, dass die Minimalwerte (Null) der Spannung des PWM-Signals kompensiert werden. "Kompensieren" im Sinne der Erfindung bedeutet dabei, dass die Regelschaltung ab einem vorgebbaren Wert der Spannung des Bordnetzes durch die Versorgungsspannung der Anti-Flicker-Schaltung versorgt wird. Vorzugsweise ist dazu vorgesehen, dass der Maximalwert der Versorgungsspannung kleiner eingestellt wird als der Maximalwert der Spannung des Bordnetzes. Hierdurch ist sichergestellt, dass bei ausreichender Spannung des Bordnetzes die Regelschaltung durch den Stromkreis des Bordnetzes versorgt wird. Bei einem Abfall der Spannung des Bordnetzes unter den eingestellten Wert der Versorgungsspannung wird die Regelschaltung hingegen über den Stromkreis der Anti-Flicker-Schaltung mit Spannung versorgt. Vorzugsweise ist es hierbei vorgesehen, dass die Anti-Flicker-Schaltung wenigstens eine Diode aufweist, die in Richtung der Regelschaltung in Durchlassrichtung angeordnet ist. hierdurch wird ein Spannungsabfall im Vergleich zur Spannung des Bordnetzes an der Diode verursacht.

Es kann vorzugsweise vorgesehen sein, dass die Glühlampensimulationsschaltung ebenfalls wenigstens eine Anti-Rückfluss-Diode (AR-Diode) aufweist, die zwischen einer leitungstechnischen Verbindungsstelle der Anti-Flicker-Schaltung, an der die Versorgungsspannung eingespeist werden kann, und einem Eingang für die vom Bordnetz bereitgestellte PWM-Spannung angeordnet ist. Die AR-Diode ist dabei in Sperrichtung der Versorgungsspannung und in Durchlassrichtung der PWM-Spannung angeordnet. Sie dient dazu, einen Rückfluss der Versorgungsspannung der Anti-Flicker-Schaltung in das Bordnetz zu verhindern. Für den erfindungsgemäßen Fall, in dem die Anti-Flicker-Schaltung mittels Dioden realisiert ist, ist es vorgesehen, dass die Anti-Flicker-Schaltung über wenigstens eine in Durchlassrichtung der Versorgungsspannung angeordnete Diode mehr verfügt, als AR-Dioden in der vorgesehen sind. Hierdurch ist sichergestellt, dass die Versorgungsspannung dem Betrag nach stets geringer ist, als die PWM-Spannung des Bordnetzes.

Alternativ kann die Versorgungsspannung mit einem Wert entsprechend dem Maximalwert der Spannung des Bordnetzes bereitgestellt werden. Hierbei ist es vorgesehen, dass der Stromkreis der Anti-Flicker-Schaltung mittels eines elektronischen Schalters in Abhängigkeit der Spannung des Bordnetzes und/oder des Aktivierungszustandes des Stromkreises des Bordnetzes schaltbar, insbesondere aktivierbar und deaktivierbar ist. "Aktivierungszustände" im Sinne der Erfindung sind insbesondere "ON" und "OFF". Im Falle einer PWM-Rechteckspannung beträgt der Minimalwert der Spannung in der Regel "NULL". Im Minimalbereich des PWM-Signals befindet sich der Stromkreis des Bordnetzes damit im "OFF" Zustand. Im Maximalbereich des PWM-Signals befindet sich der Stromkreis hingegen im "ON" Bereich. Es ist dabei vorgesehen, dass der elektronische Schalter den Die Zufuhr der Versorgungsspannung über den Stromkreis der Anti-Flicker-Schaltung aktiviert, wenn sich der Stromkreis des Bordnetzes im "OFF"-Zustand befindet. Befindet sich der Stromkreis des Bordnetzes hingegen im "ON"-Zustand, wird die Zufuhr der Versorgungsspannung über den Stromkreis der Anti-Flicker-Schaltung hingegen deaktiviert. Insbesondere mit Hinblick auf LEDs ist diese Ausgestaltung von Vorteil, da diese mit vergleichsweise hohen Spannungen oberhalb von 12 V betrieben werden können.

Gemäß einer weiteren bevorzugten Ausgestaltung der Erfindung ist die Anti-Flicker-Schaltung dazu ausgebildet, eine konstante Versorgungsspannung oder eine zur pulsweitenmodulierten Spannung des Bordnetzes gegengetaktete Versorgungsspannung bereitzustellen. Gemäß der ersten Alternative wird der Regelschaltung eine konstante Versorgungsspannung zugeführt. Dies erfolgt über den zum Stromkreis des Bordnetzes parallel geschalteten Stromkreis der Anti-Flicker-Schaltung. Hierdurch ist die durch einen revolvierenden Einschaltimpuls bedingte Falsch-Detektion einer Überlast durch die Fahrzeugelektronik ausgeschlossen.

Gemäß der zweiten Alternative wird der Regelschaltung eine zu der pulsweitenmodulierten Spannung des Bordnetzes gegengetaktete Versorgungsspannung zugeführt. "Gegengetaktet" im Sinne der Erfindung bezeichnet dabei, dass während der Signaldauer des PWM-Signalbereichs, in dem die Spannung des Bordnetzes minimal ist, über den Stromkreis der Anti-Flicker-Schaltung der Regelschaltung eine Versorgungsspannung in Höhe des Maximalwerts der Spannung des Bordnetzes zugeführt wird. Auch hierdurch kann eine kontinuierliche Spannungsversorgung der Regelschaltung erreicht und eine Fehlerdetektion durch die Fahrzeugelektronik verhindert werden.

Gemäß einer bevorzugten Ausgestaltung der Erfindung, weist die Anti-Flicker-Schaltung eine Detektionseinrichtung zur Spannungs- und/oder Stromdetektion auf. Wird mittels der Detektionseinrichtung eine PWM-Spannung und/oder ein Strom des Bordnetzes detektiert, ist der Stromkreis der Anti-Flicker-Schaltung, an dem die Versorgungsspannung anliegt, aktivierbar. Wird hingegen mittels der Detektionseinrichtung keine PWM-Spannung oder - Strom des Bordnetzes detektiert, ist der Stromkreis der Anti-Flicker-Schaltung, an dem die Versorgungsspannung anliegt, deaktivierbar. Aktivierung und Deaktivierung können mittels einer geeigneten Schaltung oder eines Controllers erfolgen, welche Teil der Anti-Flicker-Schaltung sind oder mit dieser in leitungs- bzw. steuerungstechnischer Verbindung stehen. Mittels der Detektionseinrichtung kann einerseits die Versorgungsspannung vollständig unterbrochen und andererseits eine gegengetaktete Versorgungsspannung erzeugt werden. Für den Fall, dass die Versorgungsspannung eine gegengetaktete Spannung ist, ist es vorgesehen, dass die Detektionseinrichtung über eine Zeiterfassung verfügt, mit welcher zwischen Minimalwertphasen des PWM-Signals und einem tatsächlichen Abschalten unterschieden werden kann. Die Zeiterfassung kann als Regelkreis oder Steuerkreis ausgestaltet sein, bei dem Soll- und Ist-Werte miteinander verglichen werden. Der Soll-Wert ist dabei vorgebbar und vorzugsweise in einer Datenspeichereinrichtung abrufbar hinterlegbar. Es ist zu diesem Zweck vorgesehen, dass die Detektionseinrichtung über eine Datenspeichereinrichtung, insbesondere in Form eines Flash-Speichers verfügt. Alternativ ist es vorgesehen, dass die Detektionseinrichtung mit einer Datenspeichereinrichtung eines Bordcomputers des Fahrzeugs datentechnisch verbindbar ist. Dies kann über Kabel- und/oder Funkverbindung, insbesondere Bluetooth, realisierbar sein. Zu diesem Zweck weist die Detektionseinrichtung vorzugsweise eine Sende- und Empfangseinheit auf.

Gemäß einer weiteren bevorzugten Ausführungsform der Erfindung ist es vorgesehen, dass Regelschaltung und Anti-Flicker-Schaltung als intergrierte Schaltung ausgebildet sind. Insbesondere können beide als Teil eines Mikrocontrollers ausgebildet sein.

Weitere Merkmale der Erfindung können im Detail den folgenden Ausführungsbeispielen entnommen werden. Dabei zeigen
- Fig.1: ein Schaltbild einer erfindungsgemäßen Glühlampensimulationsschaltung gemäß einer ersten Ausführungsform;
- Fig.2: ein Schaltbild einer erfindungsgemäßen Glühlampensimulationsschaltung gemäß einer zweiten Ausführungsform.

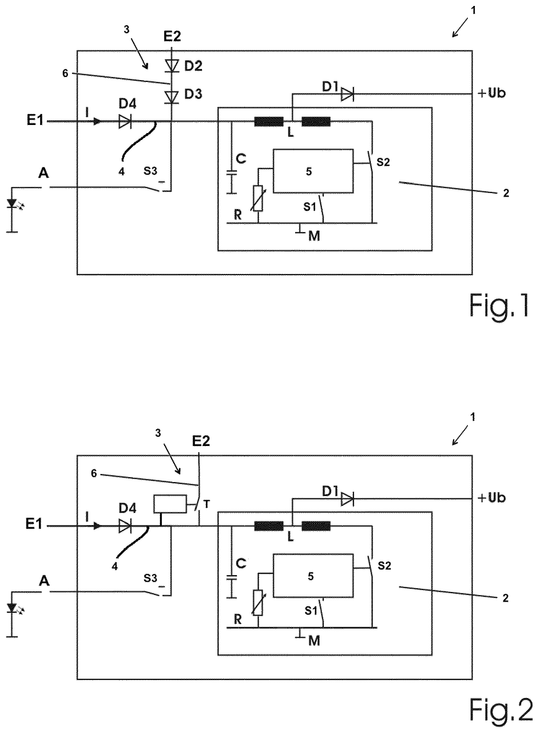

Figur 1 zeigt eine Glühlampensimulationsschaltung 1. Die Glühlampensimulationsschaltung 1 weist eine Regelschaltung 2 und eine Anti-Flicker-Schaltung 3 auf. Sie weist ferner einen von der Fahrzeugelektronik kommenden Eingang E1 für den Laststrom I (Glühlampenstrom) und wenigstens einen Ausgang A für die jeweilige mittels einer Fehlerschaltung überwachte Leuchte (Blinker, Rücklicht, Fernlicht, Bremslicht usw.) auf. Die Leuchte wird vorliegend durch ein Leuchtmittel in Form wenigstens einer LED realisiert.

Die Spannung des Laststroms wird der Regelschaltung 2 von der Fahrzeugelektronik in Form eines PWM-Signals mit Rechteckspannung (nicht gezeigt) zugeführt. Hierzu führt die Stromleitung 4 von der Fahrzeugelektronik über den Eingang E1 zu der Regelschaltung 2. Die Regelschaltung weist dabei einen Schalter S1 auf, über welchen sie an- und abschaltbar ist.

Ferner weist die Regelschaltung eine Steuerschaltung 5 auf. Die Steuerschaltung 5 ist vorliegend als IC (integrated circuit)-Regelkreis ausgebildet. Die Steuerschaltung 5 steuert den Schalter S2. Mittels der Ansteuerung der Steuerschaltung 5 kann über den Widerstand R der Strom eingestellt werden.

Über den Schalter S2 wird darüber hinaus die Regelung getaktet, wodurch in der Spule L ein Magnetfeld aufgebaut wird. Die in der Spule L gespeicherte elektrische Energie wird in Form eines Spannungsimpulses mit der Spannung Ub in das Bordnetz zurückgespeist. Auf dem Leitungsweg von der Spule L zum Bordnetz ist eine Diode D1 in Durchlassrichtung geschaltet. Die Diode D1 soll einen Rückfluss des Stroms aus dem Bordnetz in die Glühlampensimulationsschaltung 1 verhindern.

Die Regelschaltung 2 weist ferner einen Kondensator C auf. Die Kondensator C dient der Glättung und Pufferung der Eingangsspannung. Darüber hinaus kann mittels des Kondensators C der Einschaltimpuls einer Glühbirne simuliert werden.

Sollte ein mittels der nicht dargestellten Fehlerschaltung überwachter Stromwert des Leuchtmittels als Fehler detektiert werden, z.B. im Falle einer Überlast, kann die Last über den Schalter S3 abgeschaltet oder umgeschaltet werden. Es hat sich dabei gezeigt, dass im Falle einer vom Bordnetz bereitgestellten PWM-Spannung ein sich wiederholender Einschaltimpuls der Regelschaltung von den Fehlerschaltungen der Fahrzeugelektronik nach gewisser Zeit als Überlast gewertet und fälschlicherweise als Fehler detektiert wird.

Zur Abhilfe dient die Anti-Flicker-Schaltung 3. Gemäß Figur 1 weist sie einen zweiten Eingang E2 für eine ebenfalls aus dem Bordnetz stammende konstante Versorgungsspannung auf. Der Eingang E2 steht über den Stromkreis 6 ebenfalls mit der Regelschaltung 2 in leitungstechnischer Verbindung. Der Stromkreis 6 weist zwischen Eingang E2 und Regelschaltung 2 zwei Dioden D2 und D3 auf. Durch die Dioden D2, D3 wird im Stromkreis 6 ein Spannungsabfall bewirkt. Hierdurch ist erreicht, dass die am Eingang E2 anliegende Versorgungsspannung, welche der Maximalspannung der PWM-Spannung des Bordnetzes entspricht, reduziert wird. Die Reduktion kann zwischen 0,5 und 2 Volt betragen. Über die Wahl der Dioden kann der Maximalwert der Versorgungsspannung eingestellt werden. Hierdurch ist sichergestellt, dass beim Anliegen einer maximalen Spannung der PWM-Spannung des Bordnetzes die Versorgung der Regelschaltung 2 über die Stromleitung 4 erfolgt. Sinkt die PWM-Spannung hingegen auf ihren Minimalwert wird die Regelschaltung 2 über den Stromkreis 6 mit Spannung versorgt.

Um zu verhindern, dass es während des Betriebs der Regelschaltung 2 über den Stromkreis 6 zu einem Stromrückfluss in das Bordnetz über Eingang E1 kommt, ist zwischen dem Kreuzungspunkt von Stromleitung 6 mit Stromleitung 4 und Eingang E1 eine Diode D4 in Sperrrichtung der Versorgungsspannung angeordnet.

Ferner kann die Ausgestaltung nach Figur 1 eine in Figur 1 nicht dargestellte Detektionseinrichtung aufweisen, die die Anti-Flicker-Schaltung in Abhängigkeit der in Stromleitung 4 anliegenden PWM-Spannung aktiviert oder deaktiviert.

Figur 1 zeigt die Ausführungsform der Erfindung, in der die Anti-Flicker-Schaltung mittels Zuführung einer konstanten Versorgungsspannung verhindert, dass PWM-Spannung des Bordnetzes beim Betrieb der Glühlampensimulationsschaltung zu falscher Fehlerdetektion führt. Diese Ausführungsform kommt mit einfachen technischen Mitteln aus, führt aber gleichwohl zur Lösung der erfindungsgemäßen Aufgabe.

Figur 2 zeigt hingegen eine alternative Ausführungsform der erfindungsgemäßen Glühlampensimulationsschaltung 1, bei der die Kompensation der PWM-Spannung des Bordnetzes durch die Zuführung einer von der Anti-Flicker-Schaltung 3 bereitgestellten gegengetakteten Versorgungsspannung erfolgt.

Anstelle der Dioden D2, D3 ist im Stromkreis 6 eine Transistorschaltung T angeordnet. Die Transistorschaltung T ist leitungstechnisch sowohl mit dem Stromkreis 6 als auch dem Stromkreis 4 verbunden. Sie verfügt über eine nicht näher dargestellte Detektionseinrichtung, die die Erkennung einer am Eingang E1 anliegenden Spannung erlaubt. Die Detektionseinrichtung ist mit einem Transistor, vorzugsweise einem FET, verbunden. Die Detektionseinrichtung erlaubt die Detektierung von Aktivierungszuständen der PWM-Spannung des Bordnetzes und die Aktivierung und Deaktivierung des Transistors in Abhängigkeit des detektierten Aktivierungszustandes. Dabei wird der Transistor derart gesteuert, dass die Zufuhr der Versorgungsspannung über den Stromkreis 6 der Anti-Flicker-Schaltung 3 aktiviert wird, wenn sich der Stromkreis 4 des Bordnetzes im "OFF"-Zustand befindet. Befindet sich der Stromkreis 4 des Bordnetzes hingegen im "ON"-Zustand, wird der Transistor derart gesteuert, dass die Zufuhr der Versorgungsspannung über den Stromkreis der Anti-Flicker-Schaltung hingegen deaktiviert wird. Ferner verfügt die Detektionseinrichtung über eine Zeiterfassung, um zu erkennen, wann an Stromleitung 4 eine PWM-Spannung anliegt und wann an Stromleitung 4 keine Spannung anliegt. Hierdurch kann neben der Generierung einer gegengetakteten Versorgungsspannung die Anti-Flicker-Schaltung je nach dem, ob eine Spannung in Stromleitung 4 anliegt oder nicht, An- oder Aus geschaltet werden. Hierdurch wird verhindert, dass die Regelschaltung auch bei komplett ausgeschalteter PWM-Spannung über die Anti-Flicker-Schaltung weiter versorgt wird.

Auf diese Art lässt sich die Regelschaltung ebenfalls mit einer konstanten Spannung versorgen und die Detektion einer fiktiven Überlast verhindern. Darüber hinaus ist die Ausgestaltung nach Figur 2 von Vorteil, da mittels der Transistorschaltung nur vergleichsweise geringe Wärmeverluste verursacht werden.

### Bezugszeichenliste

- 1.: Glühlampensimulationsschaltung
- 2.: Regelschaltung
- 3.: Anti-Flicker-Schaltung
- 4.: Erster Stromkreis
- 5.: Steuerschaltung
- 6.: Zweiter Stromkreis
- S1-S3: Schalter
- D1-D4: Dioden
- R: Widerstand
- L: Spule
- C: Kondensator
- T: Transistorschaltung
- E1: Eingang PWM-Spannung
- E2: Eingang Versorgungsspannung
- A: Ausgang
- I: Laststrom

## Patentansprüche

1. Glühlampensimulationsschaltung zur elektronischen Ansteuerung und Überwachung von Fahrzeugbeleuchtungen, mit einer Regelschaltung zur Lastsimulation, die eine parallel zu einer zu überwachenden Leuchte schaltbare Last aufweist, wobei mittels der Regelschaltung ein Teil der bei der Lastsimulation verbrauchten Leistung wieder in das Bordnetz zurückführbar ist, **gekennzeichnet durch** eine der Regelschaltung vorgeschaltete Anti-Flicker-Schaltung, die dazu ausgebildet ist, elektrische Spannungsänderungen einer pulsweitenmodulierten Spannung eines Stromkreises des Bordnetzes zu kompensieren.

2. Glühlampensimulationsschaltung nach Anspruch 1, **dadurch gekennzeichnet, dass** die Anti-Flicker-Schaltung einen eigenen Stromkreis bereitstellt, über die der Regelschaltung parallel zur Spannung des Bordnetzes eine Versorgungsspannung zuführbar ist.

3. Glühlampensimulationsschaltung nach Anspruch 2, **dadurch gekennzeichnet, dass** die Anti-Flicker-Schaltung dazu ausgebildet ist, eine konstante Versorgungsspannung oder eine zur pulsweitenmodulierten Spannung des Bordnetzes gegengetaktete Versorgungsspannung bereitzustellen.

4. Glühlampensimulationsschaltung nach einem der Ansprüche 1 oder 2, **dadurch gekennzeichnet, dass** die Anti-Flicker-Schaltung einen elektronischen Schalter aufweist, durch den die Zufuhr der Versorgungsspannung über die Anti-Flicker-Schaltung in Abhängigkeit eines Aktivierungszustandes des Stromkreises des Bordnetzes aktivierbar oder deaktivierbar ist.

5. Glühlampensimulationsschaltung nach einem der Ansprüche 1 bis 4, **dadurch gekennzeichnet, dass** die Anti-Flicker-Schaltung wenigstens eine Diode oder einen Transistor aufweist.

6. Glühlampensimulationsschaltung nach Anspruch 5, **gekennzeichnet durch** wenigstens eine weitere Diode oder einen weiteren Transistor, um die Einspeisung der von der Anti-Flicker-Schaltung zugeführten Versorgungsspannung in das Bordnetz zu verhindern

7. Glühlampensimulationsschaltung nach einem der Ansprüche 1 bis 6, **dadurch gekennzeichnet, dass** Regelschaltung und Anti-Flicker-Schaltung als integrierte Schaltung ausgebildet sind.

8. Verfahren zur Überwachung von Fahrzeugbeleuchtungen mit Glühlampensimulation mittels einer Glühlampensimulationsschaltung nach einem der Ansprüche 1 bis 7, bei dem eine Glühlampe durch eine parallel zu der zu überwachenden Leuchte geschaltete Last in einer Regelschaltung simuliert wird, wobei ein Teil der bei der Lastsimulation verbrauchten Leistung wieder in das Bordnetz zurückgeführt wird, **dadurch gekennzeichnet, dass** elektrische Spannungsänderungen einer pulsweitenmodulierten Spannung des Bordnetzes bei der Durchführung der Lastsimulation kompensiert werden.

9. Verfahren nach Anspruch 8, **dadurch gekennzeichnet, dass** zur Kompensation der Regelschaltung eine Versorgungsspannung zusätzlich zu der Spannung des Bordnetzes zugeführt wird.

10. Verfahren nach Anspruch 9, **dadurch gekennzeichnet, dass** zwischen der Spannung des Bordnetzes und der Versorgungsspannung eine Spannungsdifferenz eingestellt wird
